# EUROPÄISCHE PATENTANMELDUNG

(11) **EP 1 528 285 A2**
(43) Veröffentlichungstag der Anmeldung: **04.05.2005**
(21) Anmeldenummer: 04025263.7
(22) Anmeldetag: 23.10.2004
(51) Int. Cl.: F16H 3/00, F16H 3/12

(54) **Übertragungsunterbrechungsfreies Schaltgetriebe**

(30) Priorität: 31.10.2003 DE 10350917
(71) Anmelder: RLE International Produktionsentwicklungsgesellschaft mbH, 50672 Köln (DE)
(72) Erfinder: Barabassy, Nikolaus, 50226 Frechen (DE); Nyiregyhazi, Zoltan, 50739 Köln (DE)
(74) Vertreter: von Kreisler Selting Werner

(57) **Zusammenfassung**

Ein übertragungsunterbrechungsfreies Schaltgetriebe weist eine Antriebswelle (10) auf. Mit der Antriebswelle (10) ist eine Teilungseinrichtung (12) zum Aufteilen des Drehmoments der Antriebswelle (10) auf zwei Vorgelegewellen (32,34) verbunden. Auf den Vorgelegewellen (32,34) sind mehrere Gangräder (36,38,40,46,48,50,52) angeordnet. Die Gangräder (36,38,40,46,48,50,52) sind über Zahnräder (58,60,62), eine Welle (66), Zahnräder (68,70) mit einer Abtriebswelle (72) verbindbar. Während eines Gangwechselvorgangs wird eine Zentralregeleinheit (118, 120) zum Umlenken des Hauptmoments auf nur eine der beiden Vorgelegewellen (32,34) aktiviert und zum exakten Einstellen der Drehzahl der zu schaltenden Vorgelegewelle genutzt.

## Beschreibung

Die Erfindung betrifft ein übertragungunterbrechungsfreies, insbesondere übertragungsunterbrechungsfreies, zentral synchronisiertes Schaltgetriebe.

Bei herkömmlichen Schaltgetrieben ist zwischen der Kurbelwelle des Motors und einer Antriebswelle des Getriebes eine Kupplung vorgesehen. Beim Schalten der Gänge wird die Kurbelwelle von der Antriebswelle mit Hilfe der Kupplung getrennt. Während des Gangwechselvorgangs ist somit bei herkömmlichen Schaltgetrieben keine Kraftübertragung möglich.

Bei Automatikgetrieben sind mehrere Planetensätze hintereinander angeordnet und über beispielsweise hydraulisch betätigbare Lamellenkupplungen miteinander verbunden. Beim Schalten eines Automatikgetriebes werden Lamellenkupplungen oder Bremsbänder betätigt. Dies hat zur Folge, dass die Kraftübertragung während des Gangwechselvorgangs nicht unterbrochen wird. Bei Automatikgetrieben ist somit der Wirkungsgrad während des Gangwechselvorgangs höher als bei Handschaltgetrieben. Andererseits ist der Wirkungsgrad eines Schaltgetriebes zwischen den Schaltvorgängen deutlich höher als bei einem Automatikgetriebe. Ferner weisen Automatikgetriebe den Nachteil auf, dass die Herstellungskosten erheblich höher sind, als bei Schaltgetrieben.

Bei bekannten übertragungsunterbrechungsfreien Schaltgetrieben (z.B. Doppelkupplungsgetriebe) sind die Gangräder für die Gänge 1, 3, 5 auf der einen Antriebswelle und Vorgelegewelle und die Gangräder für die Gänge 2, 4, 6 auf der anderen Antriebswelle und Vorgelegewelle angeordnet. Zum Gangwechsel werden die beiden Kupplungen gleichzeitig betätigt, so dass gleichzeitig die Verbindung zwischen der Kurbelwelle und der ersten Antriebswelle gelöst und zwischen der Kurbelwelle und der zweiten Antriebswelle geschlossen wird. Da bei derartigen Getrieben die zu schaltende Welle vom Kraftfluss getrennt wird, ist die Drehzahlanpassung nur durch Synchronisation möglich. Ferner ist es bei derartigen Getrieben nachteilig, dass eine der beiden Kupplungen stets geschlossen werden muss (d.h. bei Lamellenkupplungen ist ständige Öldruck erforderlich).

In GB 2 110 324 ist ein übertragungsunterbrechungsfreies Schaltgetriebe beschrieben. Mit einer Antriebswelle ist eine Teilungseinrichtung zum Aufteilen des Drehmoments der Antriebswelle auf zwei Vorgelegewellen verbunden. Auf den Vorgelegewellen sind mehrere Gangräder angeordnet. Über die Gangräder ist eine der beiden Vorgelegewellen mit einer Antriebswelle verbindbar. Ferner sind zwei Regeleinheiten zum Umlenken des Motordrehmoments auf eine der beiden Vorgelegewellen während eines Gangwechselvorgangs vorgesehen. Mit Hilfe einer weiteren Regeleinheit erfolgt ein Synchronisieren der beiden Vorgelegewellen.

Aufgabe der Erfindung ist es, ein übertragungsunterbrechungsfreies Schaltgetriebe mit verbessertem Wirkungsgrad zu schaffen.

Die Lösung der Aufgabe erfolgt erfindungsgemäß durch die Merkmale des Anspruchs 1.

Das erfindungsgemäße übertragungsunterbrechungsfreie Schaltgetriebe weist eine Antriebswelle -direkt mit der Kurbelwelle verbunden- auf, die mit einer Teilungseinrichtung verbunden ist. Die Teilungseinrichtung ist mit zwei Vorgelegewellen verbunden, so dass durch die Teilungseinrichtung das Drehmoment der Antriebswelle auf die beiden Vorgelegewellen aufgeteilt wird. Auf jeder der beiden Vorgelegewellen sind mehrere Gangräder angeordnet. Über mindestens ein Gangrad einer der beiden Vorgelegewellen ist ein Kraftschluss zu der Abtriebswelle realisiert. Erfindungsgemäß ist mit den beiden Vorgelegewellen eine Zentralregeleinheit verbunden. Die Zentralregeleinheit dient während eines Gangwechselvorgangs zum Umlenken des Motordrehmoments auf eine der beiden Vorgelegewellen und zur Drehzahlanpassung der zu schaltenden Vorgelegewellen.

Im herkömmlichen Fahrbetrieb wird somit bei dem erfindungsgemäßen Schaltgetriebe über beide Vorgelegewellen ein Drehmoment auf die Abtriebswelle übertragen. Um einen Gangwechsel bei einer der beiden Vorgelegewellen zu ermöglichen, d.h. die Verbindung zwischen der Gangwelle und einem Gangrad zu lösen und eine Verbindung zwischen der Vorgelegewelle und einem anderen Gangrad herzustellen, ist es erforderlich, dass während des Gangwechselvorgangs kein Moment von dieser Vorgelegewelle übertragen wird. Dies wird durch die erfindungsgemäße Zentralregeleinheit erreicht. Nach dem Gangwechselvorgang kann die erfindungsgemäße Zentralregeleinheit wieder deaktiviert bzw. ausgeschaltet werden, so dass wiederum von beiden Vorgelegewellen ein Drehmoment auf die Abtriebswelle übertragen wird. Da erfindungsgemäß während des Gangwechsel- bzw. Schaltvorgangs auf der einen Vorgelegewelle die andere Vorgelegewelle im Wesentlichen das gesamte Drehmoment auf die Abtriebswelle überträgt, findet keine Übertragungsunterbrechung statt. Da die Zentralregeleinheit bei geschalteter Gangstufe deaktiviert ist, wird in jeder Gangstufe ein hoher Wirkungsgrad dieses Schaltgetriebes realisiert.

Als Zentralregeleinheit kann einen stufenloses Getriebe eingesetzt werden. Die Zentralregeleinheit ist ausschließlich während des Gangwechselvorgangs aktiv. Ferner kann ein als Zentralregeleinheit vorgesehenes stufenloses Getriebe kostengünstig ausgelegt werden, da die anzupassenden Drehzahlunterschiede kleiner und die Betriebsstunden und somit der zu berücksichtigende Verschleiß erheblich geringer sind. Eine weiterer Vorteil der Zentralregeleinheit ist das geringer zu übertragende Drehmoment.

Vorzugsweise weist die Teilungseinrichtung, die zwischen der Antriebswelle und den beiden Vorgelegewellen angeordnet ist, zwei jeweils mit einer Vorgelegewelle verbundene Ausgangswellen auf. Hierbei kann die Verbindung zwischen den Ausgangswellen der Teilungseinrichtung und den Vorgelegewellen unmittelbar oder über zwischengeschaltete Zahnräder u. dgl. erfolgen. Vorzugsweise ist die Teilungseinrichtung derart ausgebildet, dass das Drehzahlverhältnis zwischen den beiden Ausgangswellen variabel ist. Insbesondere ist hierzu das Vorsehen eines Planetengetriebes in der Teilungseinrichtung geeignet. Hierbei ist beispielsweise eine Vorgelegewelle mit einem Sonnenrad und vorzugsweise die andere Vorgelegewelle mit einem Hohlrad des Planetengetriebes verbunden. Besonders bevorzugt ist es hierbei, dass die Antriebswelle mit dem Planetenträger verbunden ist. Das Vorsehen eines Planetengetriebes in der Teilungseinrichtung hat insbesondere den Vorteil, dass beim Gangwechselvorgang durch die Zentralregeleinheit die Drehzahl einer Vorgelegewelle variiert wird. Dies wird sodann durch das Planetengetriebe entsprechend ausgeglichen.

Bei einer besonders bevorzugten Ausführungsform der Erfindung ist, zumindest bei den Vorwärtsgängen, jeweils gleichzeitig ein Gangrad je Vorgelegewelle mit einem Zahnrad der Abtriebswelle im Kraftfluss.

Vorzugsweise ist die Auslegung der Zahnräder auf beiden Vorgelegewellen so gewählt, dass die Drehzahlverhältnisse in allen Gangstufen der beiden Vorgelegewellen nur zwei konstante Werte ("k1" oder "k2") ermöglichen. Alle Gangsprünge weisen den gleichen Betrag auf. Vorzugsweise können unter Verwendung eines konstanten Drehzahlverhältnisse von "1" auf beiden Vorgelegewellen gleiche Radsätze verwendet werden. Die verwendeten Radsätze weisen insbesondere sich einander entsprechende Gangrad-Grössen auf, d.h. jeweils zwei Zahnräder, die auf unterschiedlichen Vorgelegewellen angeordnet sind, sind gleich gross. Erfindungsgemäss wechseln die Drehzahlverhältnisse zweier benachbarter Gangstufen zwischen den beiden konstanten Werten, d.h. von "k1" nach "k2" oder umgekehrt.

In dem erfindungsgemässen übertragungsunterbrechungsfreien Schaltgetriebe erfolgt das Wechseln der Gänge dadurch, dass die Zentralregeleinheit zunächst das momentan bestehende Übersetzungsverhältnis zwischen den beiden Vorgelegewellen, das entweder "k1" oder "k2" ist, einstellt. Während des Trennens der Verbindung des auszuschaltendes Gangrades mit der Vorgelegewelle wird das Drehzahlverhältnis von der Zentralregeleinheit aufrecht erhalten. Während des Gangwechsels erfolgt die Drehmomentübertragung auf die Abtriebswelle nur über eine Vorgelegewelle, an der kein Gangwechsel stattfindet. Danach erfolgt erfindungsgemäss durch die Zentralregeleinheit die Drehzahlanpassung der zu schaltenden Vorgelegewelle, wobei dies mit Hilfe der erfindungsgemässen Zentralregeleinheit stufenlos unter Last erfolgt. Nach dieser Anpassung kann das einzuschaltende Gangrad eingelegt werden. Nach dem Wechsel des Ganges wird die Zentralregeleinheit wieder deaktiviert.

Erfindungsgemäss hat die Zentralregeleinheit zwei exakt bestimmte Funktionszustände, die den zwei möglichen Drehzahlverhältnissen ("k1" oder "k2") der beiden Vorgelegewellen entsprechen.

Bei einer besonders bevorzugten Ausführungsform der Zentralregeleinheit besteht diese aus einem Kegelradgetriebe (Aufbau und Funktion wie bekannte Kegelringgetriebe). Hierbei sind vorzugsweise zwei Vorgelege-Kegelräder vorgesehen, wobei jeweils ein Vorgelege-Kegelrad mit einer Vorgelegewelle insbesondere fest verbunden ist. Zwischen den beiden Vorgelege-Kegelrädern ist hierbei ein Zwischenelement angeordnet. Mit Hilfe des Zwischenelements kann das Drehzahlverhältnis zwischen den beiden Vorgelegewellen eingestellt werden. Hierdurch erfolgt während des Gangwechsels die erforderliche Drehmomentumlenkung von einer der beiden Vorgelegewellen auf die andere Vorgelegewelle.

Besonders bevorzugt ist es hierbei, als Zwischenelement ein Zwischen-Kegelrad und zwischen benachbarten Kegelrädern Übertragungsscheiben vorzusehen. Es ist sodann möglich, das Drehzahlverhältnis durch Verschieben der Übertragungsscheiben in Kegelrad-Längsrichtung zu ermöglichen. Hierzu ist vorzugsweise eine beispielsweise hydraulische, pneumatische und/oder elektrische Betätigungseinrichtung vorgesehen.

Bei einer weiteren Ausführungsform der Zentralregeleinheit weist diese eine Kupplungseinrichtung auf, beispielsweise eine Lamellenkupplung. Mit Hilfe der Kupplungseinrichtung ist es möglich, die beiden Drehzahlverhältnisse ("k1" oder "k2") zwischen den Vorgelegewellen bei geschlossenem Zustand der Kupplung einzustellen. Vorzugsweise ist eine Lamellenkupplung vorgesehen, die mit der Teilungseinrichtung verbunden ist. Vorzugsweise ist die Kupplung nur während des Gangwechselvorgangs aktiv.

Die Funktionen der herkömmlichen Kupplung und aller Synchronisationseinheiten werden damit auf die Zentralregeleinheit übertragen.

Nachstehend wird die Erfindung anhand bevorzugter Ausführungsformen unter Bezugnahme auf die anliegenden Zeichnungen näher erläutert.

Es zeigen:
- Fig. 1: eine schematische Prinzipskizze einer ersten Ausführungsform des erfindungsgemässen Schaltgetriebes und
- Fig. 2: eine schematische Prinzipskizze einer zweiten Ausführungsform des erfindungsgemässen Schaltgetriebes.

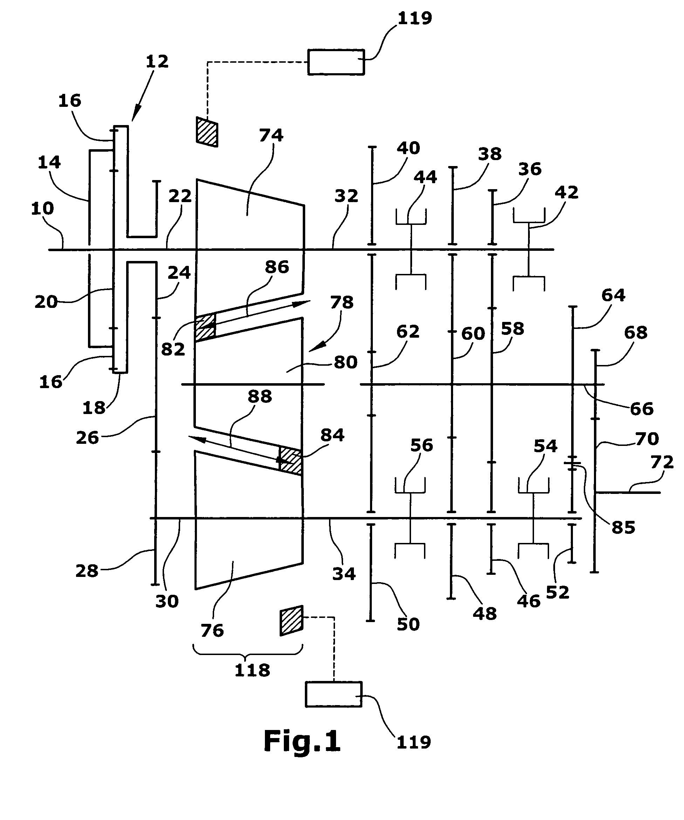

Eine Antriebswelle 10 ist mit einer Teilungseinrichtung 12 verbunden. Bei der in Fig. 1 dargestellten ersten Ausführungsform der Erfindung handelt es sich bei der Teilungseinrichtung 12 um ein Planetengetriebe. Hierbei ist die Antriebswelle 10 mit einem Planetenträger 14 fest verbunden. Der Planetenträger 14 trägt mehrere Planeten 16. Die Planeten 16 greifen einerseits in ein Hohlrad 18, das die Planeten 16 umgibt, und andererseits in ein innerhalb der Planeten 16 angeordnetes Sonnenrad 20 ein. Das Sonnenrad 20 ist im dargestellten Ausführungsbeispiel unmittelbar drehfest mit einer ersten Ausgangswelle 22 verbunden. Das Hohlrad 18 ist fest mit einem Zahnrad 24 verbunden, das einen kleineren Außendurchmesser als das Hohlrad 18 aufweist. Hierdurch ist es möglich, das Zahnrad 24 über ein Zwischenrad 26 mit einem Zahnrad 28 zu verbinden. Das Zahnrad 28 ist drehfest mit der zweiten Ausgangswelle 30 der Teilungseinrichtung verbunden.

Die beiden Ausgangswellen 22 und 30 der Teilungseinrichtung 12 gehen jeweils in eine Vorgelegewelle 32 bzw. 34 über. Zwischen den beiden Vorgelegewellen ist eine Zentralregeleinheit 118 angeordnet.

Auf der ersten Vorgelegewelle 32 sind drei Gangräder 36, 38 und 40 angeordnet. Neben dem kleinsten Gangrad 36 ist eine Schaltklaue 42 und zwischen den Gangrädern 38 und 40 eine Schaltklaue 44, beide in Wellen-Längsrichtung verschiebbar, angeordnet.

Auf der zweiten Vorgelegewelle ist zusätzlich zu den drei Gangrädern 46, 48 und 50 ein Gangrad 52 für den Rückwärtsgang vorgesehen. Ferner sind auch auf der zweiten Vorgelegewelle 34 zwei in Wellen-Längsrichtung verschiebbar angeordnete Schaltklauen 54 und 56 vorgesehen. Hierbei ist die Schaltklaue 54 zwischen dem Gangrad 52 und 46 und die Schaltklaue 56 zwischen den Gangrädern 48 und 50 angeordnet.

Je nach dem, welche Gangräder mit der entsprechenden Vorgelegewelle 32,34 über die Schaltklauen 42,44,54,56 drehfest verbunden sind, erfolgt eine Drehmomentübertragung auf eines der Zahnräder 58,60,62,64. Die Zahnräder 58,60,62,64 sind auf einer Welle 66 drehfest gehalten. Die Welle 66 ist im dargestellten Ausführungsbeispiel über Zahnräder 68,70 mit einer Abtriebswelle 72 verbunden.

Die Zentralregeleinheit 118, die lediglich während des Gangwechsels aktiv ist, weist im ersten Ausführungsbeispiel zwei Vorgelege-Kegelräder 74 und 76 auf, die mit der ersten Vorgelegewelle 32 bzw. mit der zweiten Vorgelegewelle 34 drehfest verbunden sind. Zwischen den beiden Vorgelege-Kegelrädern 74 und 76 ist ein Zwischenelement 78 angeordnet. Das Zwischenelement 78 weist ein Zwischen-Kegelrad 80 auf. Zwischen dem Zwischen-Kegelrad und den beiden auf derselben Ebene angeordneten Vorlege-Kegelrädern 74 und 76 ist jeweils eine Übertragungsscheibe 82 und 84 angeordnet. Die Übertragungsscheiben 82 und 84 dienen zur Kraftübertragung zwischen den Kegelrädern 74, 76 und 80 und sind mit einer nicht dargestellten Betätigungseinrichtung verbunden. Mit Hilfe der Betätigungseinrichtung werden die Übertragungsscheiben 82,84 in Richtung der Pfeile 86 und 88 bewegt.

Bei Stillstand eines mit der Antriebswelle verbundenen Motors ist keines der Zahnräder auf den Vorgelegewellen mit diesen drehfest verbunden. Nach dem Starten des Motors, vor dem Einlegen des ersten oder Rückwärtsganges (52 oder 46), wird die Vorgelegewelle 34 festgehalten. Zum Anfahren wird die Zentralregeleinheit 118 über eine Aktivierungs-/ Deaktivierungseinrichtung 119 aktiviert. Dadurch wird die bis dahin leerlaufende Vorgelegewelle 32 abgebremst und das Motormoment vollständig auf die inzwischen freigegebene Vorgelegewelle 34 gelenkt. Nach dieser Phase ist es möglich, das Drehzahlverhältnis "k1" durch Verschiebung der Übertragungsscheiben 82 und 84 einzustellen.

Sobald die Drehzahl der Vorgelegewelle 32 gleich der Drehzahl des Gangrades 36 ist, wird durch die Verschiebung der Schaltklaue 42 das Gangrad 36 drehfest verbunden. Die Zentralregeleinheit 118 wird deaktiviert.

Zum Einleiten des nächsten Gangwechselvorgangs wird zunächst die Zentralregeleinheit 118 wieder aktiviert. Dadurch erfolgt eine Drehmomententlastung der Vorgelegewelle 34 durch Umlenkung des Drehmomentes auf die Vorgelegewelle 32. In diesem Zustand ist es möglich, die Schaltklaue 54 in Längsrichtung der Vorgelegewelle 34 zu verschieben und die drehfeste Verbindung zwischen der Vorgelegewelle 34 und dem Gangrad 46 zu lösen. Nach der Auskoppelung wird durch Betätigen der Zentralregeleinheit die Drehzahl der Vorgelegewelle 34 auf die Drehzahl des Zahnrads 48 eingestellt. Damit wurde das Drehzahlverhältnis der Vorgelegewellen 32 und 34 von "k1" nach "k2" geändert. Anschließend erfolgt ein Verschieben der Schaltklaue 56 in Richtung des Zahnrades 48, um dieses drehfest mit der Vorgelegewelle 34 zu verbinden. Anschließend wird die Zentralregeleinheit deaktiviert, d.h. das Zwischen-Kegelrad 80 ist lastlos.

Folgende Gangstufe: Die vorherige Vorgehensweise wird wiederholt, jetzt aber auf der anderen Vorgelegewelle 32. Mit Hilfe der Zentralregeleinheit wird dabei das Drehzahlverhältnis zwischen den beiden Vorgelegewellen umgekehrt von "k2" nach "k1" eingestellt.

Das Ändern der Drehzahl der Vorgelegewelle 34 und das Umlenken des Drehmoments von der Vorgelegewelle 34 auf die Vorgelegewelle 32 ist aufgrund der Verwendung eines Planetengetriebes als Teilungseinrichtung 12 möglich, da die freie Drehbarkeit des Planetenträgers 14, des Hohlrades 18 und der Sonne 20 zueinander gewährleistet ist.

Nachfolgende Gangstufen: Entsprechend wird, um von der Gangstufe 48-36 in die Gangstufe 48-38 zu schalten, die Zentralregeleinheit 118 in die andere Richtung aktiviert und die Schaltklaue 42 und 44 entsprechend verschoben. Des Weiteren kann sodann von der Gangstufe 48-38 in die Gangstufe 50-38 und auch in 50-40 gewechselt werden.

Generell sind bei den Vorwärtsgängen somit stets zwei Gangräder 36-46, 36-48, 38-48, 38-50 oder 40-50 über die Zahnräder 58,60 oder 62 mit der Welle 66 und somit mit der Abtriebswelle 72 zur Kraftübertragung verbunden.

Eine Ausnahme stellt das Schalten des Rückwärtsganges dar, bei dem das Gangrad 52 über die Schaltklaue 54 mit der Vorgelegewelle 34 verbunden wird und sodann bei aktiver Zentralregeleinheit ein einziges Gangrad 52 über ein Zwischenrad mit dem Zahnrad 64 auf der Welle 66 drehfest verbunden ist. Hierbei wird die Vorgelegewelle 32 festgehalten.

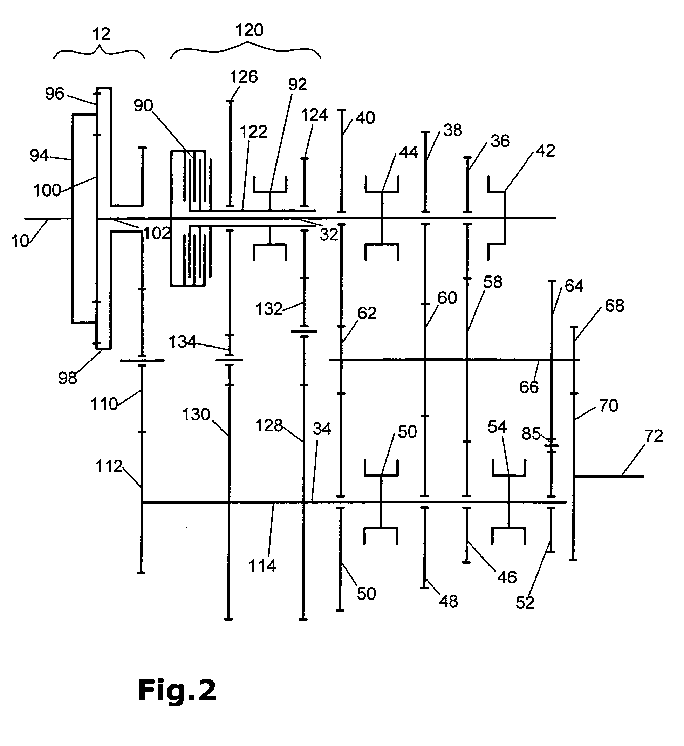

Bei der zweiten Ausführungsform der Erfindung (Fig. 2) sind ähnliche Bauteile mit denselben Bezugszeichen bezeichnet. Insbesondere sind die Vorgelegewellen 32,34, die mit den Vorgelegewellen 32,34 verbundenen Gangräder, die mit der Welle 66 verbundenen Zahnräder und die Abtriebswelle 72 identisch aufgebaut. Bei dieser Ausführungsform haben die Schaltklauen 42, 44, 54 und 56 ein momentengesteuertes Auskoppelungselement, das selbständig die Verbindung zwischen Zahnrad und Vorgelegewelle lösen kann, wenn sich die Richtung des Drehmomentes umkehrt.

Der wesentliche Unterschied zwischen den beiden Ausführungsbeispielen besteht in der Ausgestaltung der Zentralregeleinheit. Die Teilungseinrichtung 12 ist im zweiten Ausführungsbeispiel im Wesentlichen unverändert ausgebildet. Als Zentralregeleinheit ist ein Kupplung 90, Schaltklaue 92 und die Zahnraeder 124,126,128,130,132,134 vorgesehen.

Das als Teilungseinrichtung 12 dienende Planetengetriebe weist einen Planetenträger 94 auf, der mit der Antriebswelle 10 verbunden ist. Der Planetenträger 94 trägt mehrere Planeten 96. Die Planeten 96 sind von einem Hohlrad 98 umgeben. Des Weiteren ist innerhalb der Planeten 96 ein zweites Sonnenrad 100 angeordnet. Das Sonnenrad 100 ist von einer in die Vorgelegewelle 32 übergehenden Sonnenwelle 102 getragen.

Über ein Zwischenrad 110, das außerhalb des Hohlrades 98 angeordnet ist, und über ein Zahnrad 112 erfolgt eine Verbindung mit der zweiten Ausgangswelle 114, die in die Vorgelegewelle 34 übergeht.

Eine Seite der Kupplung 90 ist fest mit der Sonnenwelle 102, die andere über eine Hohlwelle 122 mit der Schaltklaue 92 verbunden. Die Schaltklaue 92 hat zwei Betriebszustände. Entweder wird durch die Schaltklaue 92 die Kupplung 90 mit dem Zahnrad 124, oder mit dem Zahnrad 126 verbunden. Die Zahnräder 124 und 126 sind auf der Hohlwelle 122 losgelagert. Das Zahnrad 128 ist fest auf der Ausgangswelle 114 ferner ueber das Zahnrad 132 mit dem Zahnrad 124 verbunden. Das Zahnrad 130 ist fest auf der Ausgangswelle 114 ferner ueber das Zahnrad 134 mit dem Zahnrad 126 verbunden.

Erfindungsgemäß ist es Aufgabe der Zentralregeleinheit, die beiden möglichen Drehzahlverhältnisse der beiden Vorgelegewellen einzustellen ( "k1" oder "k2") . Es werden beide Zustände bei vollständig geschlossener Kupplung 90 realisiert. Es ist somit möglich, dass vor der Betätigung der Kupplung 90 die Schaltklaue 92 mit dem Zahnrad 126 verbunden ist. Durch die geometrischen Verhältnisse der Zahnräder 126 und 130 ist es gewährleistet, dass bei vollständig geschlossener Kupplung das Drehzahlverhältnis der beiden Vorgelegewellen exakt "k1" ist. Ferner wird bei einer anderen Position die Schaltklaue 92 mit dem Zahnrad 124 verbunden. Durch die geometrischen Verhältnisse der Zahnräder 124 und 128 ist es gewährleistet, dass bei vollständig geschlossener Kupplung das Drehzahlverhältnis der beiden Vorgelegewellen exakt "k2" ist. In jedem Zustand, in dem kein Schaltvorgang stattfindet, ist die Kupplung 90 offen.

Die Funktionsweise der Zentralregeleinheit besteht wie bei der ersten Ausführungsform darin, dass beim Schalten zwischen zwei benachbarten Gangstufen das Drehzahlverhältnis der beiden Vorgelegewellen entweder von "k1" nach "k2" oder von "k2" nach "k1" erfolgen muss. Allerdings wird bei der zweiten Ausführungsform erfindungsgemäß eine Vorauswahl über Schaltklaue 92 getroffen.

Das auszuschaltende Drehzahlverhältnis der beiden Vorgelegewellen wird mit der Kupplung 90 schlupfend eingestellt. Dieses Drehzahlverhältnis wird während der Auskopplung des auszuschaltenden Zahnrades aufrecht erhalten. Danach wird die Kupplung 90 vollständig geschlossen, wodurch die Drehzahl der Vorgelegewelle exakt mit der Drehzahl des einzuschaltenden Gangrades gleich ist. Es ist also möglich, das zu schaltende Gangrad mit der Vorgelegewelle ohne Synchronisierung formschlüssig zu verbinden.

## Patentansprüche

1. Übertragungsunterbrechungsfreies Schaltgetriebe, mit
einer Antriebswelle (10),
einer mit der Antriebswelle (10) verbundenen Teilungseinrichtung (12) zum Aufteilen des Drehmoments der Antriebswelle (10) auf zwei Vorgelegewellen (32,34),
mehreren jeweils auf den Vorgelegewellen (32,34) angeordneten Gangrädern (36,38,40;46,48,50,52) und
einer mit den beiden Vorgelegewellen (32,34) über mindestens ein Gangrad (36,38,40;46,48,50,52) verbindbaren Abtriebswelle (72),
**gekennzeichnet durch**
eine mit den beiden Vorgelegewellen (32,34) verbundenen Zentralregeleinheit (118; 120) zum Umlenken des Motordrehmoments auf nur eine der beiden Vorgelegewellen (32,34) während eines Gangwechselvorgangs und zum Synchronisieren der zu schaltenden, anderen Vorgelegewelle (32,34).

2. Schaltgetriebe nach Anspruch 1, **dadurch gekennzeichnet, dass** die Teilungseinrichtung (12) zwei jeweils mit einer Vorgelegewelle (32,34) verbundene Ausgangswellen (22,30; 102,114) aufweist, deren Drehzahlverhältnis variabel ist.

3. Schaltgetriebe nach Anspruch 1 oder 2, **dadurch gekennzeichnet, dass** die Teilungseinrichtung (12) ein Planetengetriebe aufweist.

4. Schaltgetriebe nach Anspruch 3, **dadurch gekennzeichnet, dass** eine der Vorgelegewellen (32) mit einem Sonnenrad (20,100) des Planetengetriebes verbunden ist.

5. Schaltgetriebe nach Anspruch 3 oder 4, **dadurch gekennzeichnet, dass** eine der Vorgelegewellen (34) mit einem Hohlrad (18,98) des Planetengetriebes verbunden ist.

6. Schaltgetriebe nach einem der Ansprüche 1-5, **dadurch gekennzeichnet, dass** die Drehzahl der Vorgelegewelle 32 und die Drehzahl der Vorgelegewelle 34 in eingeschalteten Gangstufen nur zwei verschiedene Übersetzungsverhältnisse ( "k1" oder "k2") zueinander haben kann.

7. Schaltgetriebe nach einem der Ansprüche 1-6, **dadurch gekennzeichnet, dass** bei den Vorwärtsgangstufen von beiden Vorgelegewellen (32,34) eine Kraftübertragung auf die Abtriebswelle 72 erfolgt.

8. Schaltgetriebe nach einem der Ansprüche 1-7, **dadurch gekennzeichnet, dass** die aktive Zentralregeleinheit (118, 120) zwischen den beiden Vorgelegewellen ein mechanische Verbindung darstellt.

9. Schaltgetriebe nach einem der Ansprüche 1-8, **dadurch gekennzeichnet, dass** die Zentralregeleinheit (118, 120) einen Aufbau aufweist, der das Wechseln zwischen den in Anspruch 6 genannten zwei Drehzahlverhältnissen unter Last gewährleisten kann, wobei nur ein Element kraftschlüssig verstellt werden muss.

10. Schaltgetriebe nach einem der Ansprüche 1-9, **dadurch gekennzeichnet, dass** die durch die Zentralregeleinheit (118, 120) anzupassende Drehzahl der zu schaltenden Vorgelegewelle von der Abtriebsseite bestimmt wird.

11. Schaltgetriebe nach einem der Ansprüche 1-10, **dadurch gekennzeichnet, dass** die Schaltklauen 42, 44, 54 und 56 ein momentengesteuertes Auskoppelungselement haben, das selbständig die Verbindung zwischen Zahnrad und Vorgelegewelle lösen kann, wenn sich die Richtung des Drehmomentes umkehrt.

12. Schaltgetriebe nach einem der Ansprüche 1-11, **dadurch gekennzeichnet, dass** die Zentralregeleinheit zum Einstellen des Drehzahlverhältnisses zwischen den Vorgelegewellen (32,34) eine Kupplungseinrichtung (Kupplung 90, Schaltklaue 92) aufweist.

13. Schaltgetriebe nach Anspruch 12, **dadurch gekennzeichnet, dass** die Zentralregeleinheit eine Kupplung (90) zwischen der Ausgangswelle (102) und der Hohlwelle (122 ), auf der eine axial verschiebbare Schaltklaue (92) angeordnet, als Verbindung aufweist.

14. Schaltgetriebe nach einem der Ansprüche 12-13, **dadurch gekennzeichnet, dass** die Zentralregeleinheit eine Schaltklaue (92) aufweist, welche die Kupplung (90) entweder mit dem Zahnrad 124 oder mit dem Zahnrad (126) verbinden kann.
